# EUROPEAN PATENT APPLICATION

(11) **EP 1 894 902 A2**
(43) Date of publication of application: **05.03.2008**
(21) Application number: 07253437.3
(22) Date of filing: 31.08.2007
(51) Int. Cl.: C03C 25/40, C03C 25/10, D06M 15/643, D06M 11/79, B01D 39/20, F01N 3/022

(54) **Method of producing heat-resistant inorganic textile and heat-resistant inorganic textile produced using the method**

(30) Priority: 01.09.2006 JP 2006238188; 01.09.2006 JP 2006238189
(71) Applicant: Shin-Etsu Chemical Co., Ltd., Tokyo (JP)
(72) Inventor: Aoki, Yoshitaka Silicone Denshi Zairyo Gijutsu kenkyusho, Matsuida-machi, Annaka-shi, Gunma-ken (JP)
(74) Representative: Hallybone, Huw George

(57) **Abstract**

Provided is a method of producing a heat-resistant inorganic textile formed of a heat-resistant inorganic fiber that includes an inorganic base fiber and a heat-resistant inorganic ceramic layer that coats the inorganic base fiber, the method including the steps of: (1) subjecting an inorganic base textile formed of the inorganic base fiber to a coating treatment with a meltable silicone resin or a curable silicone composition, thereby forming a meltable silicone resin layer or curable silicone composition layer that coats the inorganic base fiber, (2) subjecting the meltable silicone resin layer to a non-melting treatment, thereby forming a non-melting silicone resin layer, or subjecting the curable silicone composition layer to curing, thereby forming a silicone cured product layer, and (3) heating the non-melting silicone resin layer or silicone cured product layer under a non-oxidizing atmosphere, at a temperature within a range from 400 to 1,500°C, thereby generating a heat-resistant inorganic ceramic layer. The method enables favorable conservation of resources and is economically beneficial. The heat-resistant inorganic textile produced by the method exhibits excellent heat resistance and strength, and is ideal as a material for an exhaust gas filter.

## Description

### BACKGROUND OF THE INVENTION

### 1. Field of the Invention

The present invention relates to a method of producing a heat-resistant inorganic textile that exhibits excellent heat resistance and strength, and is useful as a material for an exhaust gas filter, the method being beneficial from the viewpoint of conserving resources.

### 2. Description of the Prior Art

Exhaust gases discharged from vehicles and industrial machinery and the like are attracting considerable attention from the viewpoint of atmospheric pollution. Particularly in the case of diesel engine vehicles, the removal of NOx and suspended particulate matter comprised mainly of carbon is a significant issue.

Against this type of background, a large variety of different exhaust gas purification devices have been proposed. A typical exhaust gas purification device for a diesel engine is a structure in which a casing is provided partway along the exhaust pipe connected to the engine exhaust manifold, and a filter having very fine apertures formed therein is then disposed within this casing (patent reference 1). However, in this device, cracking caused by temperature fluctuations and dissolution loss tend to be problematic. In order to overcome these problems, exhaust gas purification devices that use either a metallic nonwoven fabric (patent reference 2) or a silicon carbide-based nonwoven fabric (patent reference 3) have also been proposed. However, because these nonwoven fabrics are composed of short fibers, the material strength tends to be low, and the production of the nonwoven fabrics requires the synthesis of a polysilane from dimethyldichlorosilane, followed by the synthesis of a polycarbosilane or polytitanocarbosilane, meaning the production process is complex and extremely expensive.
[Patent Reference 1] JP 6-92753 A
[Patent Reference 2] USP 5,908,480
[Patent Reference 3] JP 2004-60096 A

### SUMMARY OF THE INVENTION

The present invention takes the circumstances described above into consideration, with an object of providing a method of producing a heat-resistant inorganic textile that exhibits excellent heat resistance and strength, and is ideal as a material for an exhaust gas filter, wherein the method enables favorable conservation of resources and is economically beneficial, as well as providing a heat-resistant inorganic textile produced using the method.

As a result of intensive investigation aimed at achieving the above object, the inventors of the present invention discovered that a heat-resistant inorganic textile obtained by:
subjecting an inorganic base textile formed of an inorganic base fiber with either a meltable silicone resin or a curable silicone composition, thereby forming a meltable silicone resin layer or curable silicone composition layer that coats the inorganic base fiber,
subjecting the meltable silicone resin layer to a non-melting treatment to form a non-melting silicone resin layer, or curing the curable silicone composition layer to form a silicone cured product layer, and then
heating and firing the non-melting silicone resin layer or silicone cured product layer under a non-oxidizing atmosphere was able to achieve the above object, and they were therefore able to complete the present invention.

In other words, a first aspect of the present invention provides a method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a meltable silicone resin, thereby forming a meltable silicone resin layer that coats the inorganic base fiber,
subjecting the meltable silicone resin layer to a non-melting treatment, thereby forming a non-melting silicone resin layer, and
heating the non-melting silicone resin layer under a non-oxidizing atmosphere, at a temperature within a range from 400 to 1,500°C, thereby converting the non-melting silicone resin layer to a heat-resistant inorganic ceramic layer.

A second aspect of the present invention provides a method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a curable silicone composition, thereby forming a curable silicone composition layer that coats the inorganic base fiber,
curing the curable silicone composition layer, thereby forming a silicone cured product layer, and
heating the silicone cured product layer under a non-oxidizing atmosphere, at a temperature within a range from 400 to 1,500°C, thereby converting the silicone cured product layer to a heat-resistant inorganic ceramic layer.

A third aspect of the present invention provides a heat-resistant inorganic textile produced using a method described above.

A fourth aspect of the present invention provides an exhaust gas filter that comprises the above heat-resistant inorganic textile.

The heat-resistant inorganic textile obtained using the method of the present invention is able to use a high-strength and widely available material such as glass fiber as the inorganic base fiber, and providing a heat-resistant inorganic ceramic layer with excellent heat resistance on top of the base fiber yields a product with excellent heat resistance and strength. As a result, this heat-resistant inorganic textile can be used favorably as a material for exhaust gas filters that are exposed to high temperatures, and particularly as a material for exhaust gas filters used for removing the suspended particulate matter incorporated within the exhaust gas from diesel engines and the like. Moreover, according to a production method of the present invention, this type of heat-resistant inorganic textile can be produced with good suppression of wasteful consumption of resources.

### DETAILED DESCRIPTION OF THE PREFERRED EMBODIMENTS

As follows is a more detailed description of the present invention.

In this specification, the term "silicone resin" refers to an organopolysiloxane having a three dimensional structure which comprises branched siloxane units (namely, trifunctional siloxane units known as T units and/or tetrafunctional siloxane units known as Q units) as essential siloxane units. In some cases, the silicone resin may also include straight-chain siloxane units known as D units and/or monofunctional siloxane units known as M units that are positioned at molecular chain terminals.

Furthermore, in this specification, a "non-melting silicone resin" refers to a silicone resin that has no softening point. Accordingly, as the temperature is raised, the silicone resin does not melt, but rather undergoes thermal decomposition. The temperature at which a non-melting silicone resin undergoes thermal decomposition typically exceeds a temperature of approximately 400°C.

In this specification, the "softening point" refers to a temperature measured in accordance with the softening point test method (ring and ball method) prescribed in JIS K 2207. Furthermore, unless stated otherwise, room temperature refers to a temperature within a range from 15 to 35°C.

In this specification, an "inorganic base fiber" is a fiber formed of an inorganic material, and refers to the fiber that functions as the base material which is coated with the heat-resistant inorganic ceramic layer described above. Suitable examples of the inorganic base fiber include a glass fiber, carbon fiber or alumina fiber or the like. The fiber diameter of the inorganic base fiber is typically within a range from 0.1 to 50 µm, and is preferably from 1 to 30 µm.

In this specification, the term "textile" refers to a fiber; a yam or a thread; a fabric such as a woven fabric or nonwoven fabric; or a fiber bundle or the like. In this specification, the term "inorganic base textile" refers to a textile formed of the inorganic base fiber.

### [Heat-resistant Inorganic Textile]

In the present specification, a heat-resistant inorganic textile describes a textile formed of a heat-resistant inorganic fiber that comprises an inorganic base fiber and a heat-resistant inorganic ceramic layer (namely, a layer formed of a heat-resistant inorganic ceramic material) that coats the inorganic base fiber. The heat-resistant inorganic ceramic layer comprises silicon, carbon and oxygen, wherein the average elemental ratio between silicon, carbon and oxygen is represented by a compositional formula (1) shown below:

SiCₐO_{b} (1)

(wherein, a is a number that satisfies: 0.5 ≤ a ≤ 3.0, and b is a number that satisfies 1.0 ≤ b ≤ 4.0),
and the layer is thought to be formed of an amorphous inorganic ceramic material having a siloxane skeleton formed of Si-O-Si bonds and a hydrogen mass fraction within a range from 0 to 1% by mass. In the above formula, b is typically a number that satisfies 1.0 ≤ b ≤ 3.0. Furthermore, a+b is typically a number that satisfies 2.0 ≤ a+b ≤ 4.0, and is preferably a number within a range from 1.7 to 3.5. The heat-resistant inorganic textile of the present invention exhibits excellent heat resistance, and specifically, does not undergo thermal decomposition even upon heating to 1,000°C, and is able to retain the same shape as that prior to heating.

The above compositional formula (1) indicates that the average elemental ratio between silicon, carbon and oxygen within the heat-resistant inorganic ceramic layer is represented by 1:a:b. If a is smaller than 0.5, then the strength of the heat-resistant inorganic textile is unsatisfactory. In contrast, if a is larger than 3.0, then the textile is unsatisfactory from a heat resistance perspective. Furthermore, if b is smaller than 1.0, then the textile is undesirable from an economic perspective. In contrast, if b is larger than 4.0, then the strength of the heat-resistant inorganic textile is unsatisfactory. Moreover, the hydrogen mass fraction relative to the entire mass of the above heat-resistant inorganic ceramic layer is preferably within a range from 0 to 0.5% by mass. If the hydrogen mass fraction is greater than 1% by mass, then the heat resistance is unsatisfactory. The heat-resistant inorganic ceramic layer comprises essentially silicon, carbon and oxygen, and may also include hydrogen in some cases. Other elements, including group 8 elements such as the platinum-group metals platinum, palladium or rhodium, and elements such as potassium or sodium incorporated within the raw materials, may also be included provided they do not impair the object or effects of the present invention, but the quantity of such other elements is preferably not more than 2.0% by mass, and is even more preferably within a range from 0 to 1.0% by mass. In particular, group 8 elements such as the platinum-group metals platinum, palladium or rhodium have the effect of favorably accelerating the thermal decomposition reaction described below.

The thickness of the above heat-resistant inorganic ceramic layer is typically within a range from 1 nm to 10 µm, and is preferably from 5 nm to 5 µm. Even if the thickness exceeds the above range, further improvements in the heat resistance can not be expected as a result of the increased thickness.

### [Method of Producing Heat-resistant Inorganic Textile]

The heat-resistant inorganic textile of the present invention can be obtained using either of the productions methods 1 and 2 described below.

### Production Method 1:

A method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a meltable silicone resin, thereby forming a meltable silicone resin layer that coats the inorganic base fiber,
subjecting the meltable silicone resin layer to a non-melting treatment, thereby forming a non-melting silicone resin layer (namely, a layer formed of a non-melting silicone resin), and
heating the non-melting silicone resin layer under a non-oxidizing atmosphere, at a temperature within a range from 400 to 1,500°C, thereby converting the non-melting silicone resin layer to a heat-resistant inorganic ceramic layer.

### Production Method 2:

A method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a curable silicone composition, thereby forming a curable silicone composition layer that coats the inorganic base fiber,
curing the curable silicone composition layer, thereby forming a silicone cured product layer (namely, a layer formed of a silicone cured product), and
heating the silicone cured product layer under a non-oxidizing atmosphere, at a temperature within a range from 400 to 1,500°C, thereby converting the silicone cured product layer to a heat-resistant inorganic ceramic layer.

According to the above method, dissociation of the hydrogen atoms that exist within the non-melting silicone resin layer or the silicone cured product layer causes an inorganic ceramic conversion process. In the following description, this process is sometimes simply referred to as "ceramicization".

As follows is a sequential description of these methods.

### (1) Coating Treatment with a Meltable Silicone Resin or Curable Silicone Composition

### (1-1) Meltable Silicone Resin

In the production method 1, a meltable silicone resin is used for subjecting the inorganic base textile to a coating treatment. In this description, a "meltable silicone resin" refers to a silicone resin that is a solid at room temperature, but has a softening point. In other words, as the temperature of this silicone resin is raised, the resin either melts or softens at the softening point.

The meltable silicone resin used in the production method 1 is applied to an inorganic base textile preferably in a state of a water-based emulsion or organic solvent solution to decrease the viscosity of the resin during application or in a liquid state where the resin is heated at a temperature equal to or higher than the softening point of the resin. Specifically, as described below, in those cases where a heated and liquid-state meltable silicone resin is applied to the inorganic base textile, the heating temperature is usually set to a temperature within a range from 50 to 200°C, and in such cases the softening point of the meltable silicone resin is typically within a range from 40 to 150°C, and is preferably from 40 to 100°C. If the softening point is too high relative to the temperature used during application of the heated and liquid-state meltable silicone resin to the inorganic base textile, then the fluidity of the silicone resin during application is poor, which is undesirable.

Examples of solvents used for decreasing the viscosity of the meltable silicone resin during application include aromatic solvents such as toluene and xylene; aliphatic solvents such as hexane, octane, and isoparaffin; ketone solvents such as methyl ethyl ketone and methyl isobutyl ketone; ester solvents such as ethyl acetate and isobutyl acetate; ether solvents such as tetrahydrofuran, diisopropyl ether, and 1,4-dioxan; and mixed solvents thereof Of these, toluene and tetrahydrofuran are preferred.

Examples of the meltable silicone resin include the organopolysiloxanes represented by an average composition formula (2) shown below:

R¹ₘR²ₙ(OR³)ₚ(OH)_{q}SiO_{(4-m-n-p-q)/2} (2)

(wherein, each R¹ represents, independently, a hydrogen atom or a monovalent hydrocarbon group other than an aryl group that may be identical to, or different from, the other R¹ groups and may include a carbonyl group, R² represents a aryl group, R³ represents identical or different monovalent hydrocarbon groups of 1 to 4 carbon atoms, m represents a number that satisfies: 0.1 ≤ m ≤ 2, n represents a number that satisfies: 0 ≤ n ≤ 2, p represents a number that satisfies: 0 ≤ p ≤ 1.5, and q represents a number that satisfies: 0 ≤ q ≤ 0.35, provided that p+q > 0 and 0.1 ≤ m+n+p+q ≤ 2.6).

Each of the above R¹ groups preferably represents, independently, either a hydrogen atom, or a monovalent hydrocarbon group other than an aryl group that may be identical to, or different from, the other R¹ groups, may include a carbonyl group, and contains from 1 to 8 carbon atoms. Specific examples of R¹ include a hydrogen atom; alkyl groups such as a methyl group, ethyl group, propyl group, butyl group, pentyl group or hexyl group; cycloalkyl groups such as a cyclopentyl group or cyclohexyl group; alkenyl groups such as a vinyl group, allyl group, propenyl group, isopropenyl group or butenyl group; and acyl groups such as an acryloyl group or methacryloyl group. From the viewpoint of ease of availability of the raw materials, R¹ is preferably a hydrogen atom, methyl group, ethyl group or vinyl group. In those cases where R¹ is a hydrogen atom, the reactive silicon atom-bonded hydrogen atoms (Si-H groups) that exist within the silicone resin accelerate the formation of cross-links via hydrolysis-condensation reactions that occur during the non-melting treatment described below, and consequently improve the action that prevents fusion of the heat-resistant inorganic fibers when the non-melting silicone resin layer that coats the inorganic base fiber is fired to effect ceramicization.

The aforementioned m is a number that satisfies: 0.1 ≤ m ≤ 2, the upper limit for m is preferably 1.5, and the lower limit for m is preferably 0.1, and even more preferably 0.5. Provided the value of m falls within this range, the fluidity of the meltable silicone resin is ideal for application of the meltable silicone resin in a heated and liquid state, thereby improving the workability. Furthermore, reduction in the thickness of the non-melting silicone resin layer during the firing and ceramicization of the non-melting silicone resin layer can also be more readily suppressed.

The aforementioned R² group is an aryl group, preferably a phenyl group. Increased quantities of the R² group raise the melting point of the meltable silicone resin, and consequently increasing or reducing the quantity of R² groups can be used to alter the fluidity of the meltable silicone resin to a level that is suitable for application of the resin in a heated and liquid state, thereby improving the workability of the resin.

The aforementioned n is a number that satisfies: 0 ≤ n ≤ 2, the upper limit for n is preferably 1.5, and the lower limit for n is preferably 0.05, and even more preferably 0.1. Provided the value of n falls within this range, the phenyl group content is not too high, and reduction in the thickness of the non-melting silicone resin layer during the firing and ceramicization of the non-melting silicone resin layer can also be more readily suppressed. Furthermore, the fluidity of the meltable silicone resin is more suitable for application of the resin in a heated and liquid state, thereby improving the workability of the resin.

Specific examples of R³ include alkyl groups of 1 to 4 carbon atoms such as a methyl group, ethyl group, propyl group, isopropyl group, butyl group or isobutyl group, and a methyl group is particularly preferred industrially. If R³ is a monovalent hydrocarbon group containing 5 or more carbon atoms, then the reactivity of the group represented by OR³ becomes overly poor, which means the formation of cross-links via hydrolysis-condensation reactions that occur during the non-melting treatment described below tends to be inadequate, and consequently when the non-melting silicone resin layer coating the inorganic base fiber is fired to effect ceramicization, there is an increased chance of fusion occurring between the heat-resistant inorganic fibers.

The aforementioned p indicates the quantity of the silicon atom-bonded hydrocarbyloxy groups represented by OR³ and is a number that satisfies: 0 ≤ p ≤ 1.5, the upper limit for p is preferably 1.2, and the lower limit for p is preferably 0.05 and even more preferably 0.1. Provided the value of p falls within this range, the hydrocarbyloxy group content within the silicone resin is not too high, and the molecular weight of the silicone resin can be maintained at a high value, meaning elimination of silicon or carbon from the non-melting silicone resin during firing and ceramicization of the non-melting silicone resin can be suppresses.

The aforementioned q indicates the quantity of silicon atom-bonded hydroxyl groups and is a number that satisfies: 0 ≤ q ≤ 0.35, and is preferably a number that satisfies: 0 ≤ q ≤ 0.3, and is most preferably 0. The value of q represents the small quantity of residual hydroxyl groups retained within the meltable silicone resin during production. Provided the value of q falls within the above range, the reactivity of the silanol groups can be suppressed for the meltable silicone resin as a whole, and both the storage stability of the meltable silicone resin, and the stability and workability of the resin during application of the resin in a heated and liquid state can be more readily improved.

The value of p+q indicates the combined quantity of hydrocarbyloxy groups and hydroxyl groups, wherein p+q > 0. The hydrocarbyloxy groups (preferably alkoxy groups) and/or hydroxyl groups are necessary for forming cross-links via hydrolysis-condensation reactions during the non-melting treatment described below. The combined total of these groups is preferably within a range from 1 to 15% by mass within the meltable silicone resin, and is even more preferably from 2 to 10% by mass.

The value of m+n+p+q is a number that satisfies: 0.1 ≤ m+n+p+q ≤ 2.6. A value of m+n+p+q within this range has the effect of suppressing the emission and loss of compounds containing silicon and carbon as decomposition products from the non-melting silicone resin when the non-melting silicone resin is subjected to firing and ceramicization.

The molecular weight of the meltable silicone resin is preferably such that the resin has an appropriate softening point as described above. For example, the weight average molecular weight measured using gel permeation chromatography (hereafter abbreviated as GPC) and referenced against polystyrene standards is preferably at least 600, and is even more preferably within a range from 1,000 to 10,000.

There are no particular restrictions on the meltable silicone resin provided it satisfies the conditions described above, although a silicone resin that includes methyl groups within its structure is preferred. The meltable silicone resin may be either a single resin, or a combination of two or more resins with different molecular structures or different proportions of the various siloxane units.

These types of meltable silicone resins can be produced by conventional methods. For example, the target meltable silicone resin can be produced by conducting a cohydrolysis, if required in the presence of an alcohol of 1 to 4 carbon atoms, of the organochlorosilanes that correspond with the siloxane units incorporated within the structure of the target resin, using a ratio between the organochlorosilanes that reflects the ratio between the corresponding siloxane units, while removing the by-product hydrochloric acid and low boiling point components. Furthermore, in those cases where alkoxysilanes, silicone oils or cyclic siloxanes are used as starting raw materials, the target silicone resin can be obtained by using an acid catalyst such as hydrochloric acid, sulfuric acid or methanesulfonic acid, adding water to effect the hydrolysis if required, and following completion of the polymerization reaction, removing the acid catalyst and low boiling point components.

### (1-2) Curable Silicone Composition

In the production method 2, a curable silicone composition is used for subjecting the inorganic base textile to a coating treatment. Conventional materials can be used as this curable silicone composition. Specific examples of suitable compositions include addition-curable, photocurable, and condensation-curable silicone compositions.

The curable silicone composition used in the production method 2 is applied to an inorganic base textile preferably in a state of a water-based emulsion or organic solvent solution to decrease the viscosity of the composition during application. Examples of solvents used for decreasing the viscosity of the composition during application include those exemplified above as the solvents used for decreasing the viscosity of the meltable silicone resin during application. Of these, toluene and tetrahydrofuran are preferred.

Examples of addition-curable silicone compositions include silicone compositions in which a straight-chain organopolysiloxane having alkenyl groups such as vinyl groups at the molecular chain terminals (either at one terminal or both terminals) and/or at non-terminal positions within the molecular chain, and an organohydrogenpolysiloxane are reacted (via a hydrosilylation addition reaction) in the presence of a platinum group metal-based catalyst to effect the curing process. Examples of photocurable silicone compositions include ultraviolet light-curable silicone compositions and electron beam-curable silicone compositions. Examples of ultraviolet light-curable silicone compositions include silicone compositions that undergo curing as a result of the energy of ultraviolet light having a wavelength within a range from 200 to 400 nm. In this case, there are no particular restrictions on the curing mechanism. Specific examples of suitable compositions include acrylic silicone-based silicone compositions comprising an organopolysiloxane containing acryloyl groups or methacryloyl groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat curable, addition reaction-type compositions, and cationic polymerization-based silicone compositions comprising an organopolysiloxane containing epoxy groups, and an onium salt catalyst, and any of these compositions can be used as an ultraviolet light-curable silicone composition. Examples of electron beam-curable silicone compositions that can be used include any of the silicone compositions that are cured by a radical polymerization that is initiated by irradiating an organopolysiloxane containing radical polymerizable groups with an electron beam. Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with alkoxy group-containing siloxy groups or alkoxy group-containing siloxyalkyl groups, such as trialkoxysiloxy groups, dialkoxyorganosiloxy groups, trialkoxysiloxyethyl groups or dialkoxyorganosiloxyethyl groups, in the presence of a condensation reaction catalyst such as an organotin-based catalyst. However, in order to obtain the above heat-resistant inorganic textile with favorable dimensional precision, an addition-curable composition with minimal volume shrinkage is preferred.

As follows is a detailed description of representative examples of the curable silicone compositions described above, with the focus of the description on those components other than the inorganic filler, although any of the compositions may also include, if required, an inorganic filler or any other conventional additives.

### <Addition-curable Silicone Compositions>

Specific examples of suitable addition-curable silicone compositions include addition-curable silicone compositions comprising:
(a) an organopolysiloxane containing at least two alkenyl groups bonded to silicon atoms,
(b) an organohydrogenpolysiloxane containing at least two hydrogen atoms bonded to silicon atoms (namely, SiH groups), in sufficient quantity that the quantity of hydrogen atoms bonded to silicon atoms within this component (b) relative to each 1 mol of alkenyl groups within the entire curable silicone composition is within a range from 0.1 to 5.0 mols, and
(c) an effective quantity of a platinum group metal-based catalyst.

### - Component (a)

The organopolysiloxane of the component (a) is the base polymer of the addition-curable silicone composition, and contains at least two alkenyl groups bonded to silicon atoms. Conventional organopolysiloxanes can be used as the component (a). The weight average molecular weight of the organopolysiloxane of the component (a), measured by GPC and referenced against polystyrene standards, is preferably within a range from approximately 3,000 to 300,000. Moreover, the viscosity at 25°C of the organopolysiloxane of the component (a) is preferably within a range from 100 to 1,000,000 mPa·s, and is even more preferably from 1,000 to 100,000 mPa·s. Provided the viscosity is within this range, handling of the resulting organopolysiloxane tends to be more favorable. From the viewpoint of ease of availability of the raw materials, the organopolysiloxane of the component (a) is basically either a straight-chain structure with no branching, in which the molecular chain (the principal chain) comprises repeating diorganosiloxane units (R⁴₂SiO_{2/2} units), and both molecular chain terminals are blocked with triorganosiloxy groups (R⁴₃SiO_{1/2} units), or a cyclic structure with no branching in which the molecular chain comprises repeating diorganosiloxane units, although the structure may also include partial branch structures comprising trifunctional siloxane units (R⁴SiO_{3/2} units) and/or SiO_{4/2} units or the like (in the above formulas, R⁴ represents identical or different, unsubstituted or substituted monovalent hydrocarbon groups that preferably contain from 1 to 10 carbon atoms, and even more preferably from 1 to 8 carbon atoms).

Examples of the component (a) include organopolysiloxanes containing at least two alkenyl groups within each molecule, represented by an average composition formula (3) shown below.

R⁴_{c}SiO_{(4-c)/2} (3)

(wherein, R⁴ is as defined above, and c represents a positive number that is preferably within a range from 1.5 to 2,8, even more preferably from 1.8 to 2.5, and is most preferably from 1.95 to 2.05).

Examples of the monovalent hydrocarbon groups represented by R⁴ include alkyl groups such as a methyl group, ethyl group, propyl group, isopropyl group, butyl group, isobutyl group, tert-butyl group, pentyl group, neopentyl group, hexyl group, octyl group, nonyl group or decyl group; aryl groups such as a phenyl group, tolyl group, xylyl group or naphthyl group; aralkyl groups such as a benzyl group, phenylethyl group or phenylpropyl group; cycloalkyl groups such as a cyclopentyl group or cyclohexyl group; alkenyl groups such as a vinyl group, allyl group, propenyl group, isopropenyl group, butenyl group, hexenyl group, or octenyl group; cycloalkenyl groups such as a cyclohexenyl group; and groups in which either a portion of, or all of, the hydrogen atoms within the above hydrocarbon groups have been substituted with a halogen atom such as a fluorine atom, bromine atom or chlorine atom, or a cyano group or the like, including a chloromethyl group, chloropropyl group, bromoethyl group, trifluoropropyl group, or cyanoethyl group.

In this case, at least two of the R⁴ groups represent alkenyl groups (and in particular alkenyl groups that preferably contain from 2 to 8 carbon atoms, and even more preferably from 2 to 6 carbon atoms). The alkenyl group quantity relative to the total of all the organic groups bonded to silicon atoms (that is, the proportion of alkenyl groups amongst all the unsubstituted and substituted monovalent hydrocarbon groups represented by R⁴ within the above average composition formula (3)) is typically within a range from 0.01 to 20 mol%, and is preferably from 0.1 to 10 mol%. In those cases where the organopolysiloxane of the component (a) has a straight-chain structure, these alkenyl groups may be bonded solely to silicon atoms at the molecular chain terminals, solely to non-terminal silicon atoms within the molecular chain, or to both these types of silicon atoms, although from the viewpoints of the composition curing rate and the physical properties of the resulting cured product, at least one alkenyl group is preferably bonded to a silicon atom at a molecular chain terminal.

The aforementioned R⁴ groups may essentially be any of the above groups, although the alkenyl groups are preferably vinyl groups, and the monovalent hydrocarbon groups other than the alkenyl groups are preferably methyl groups or phenyl groups.

Specific examples of the component (a) include compounds represented by the general formulas shown below.

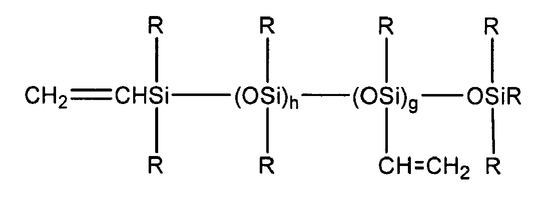

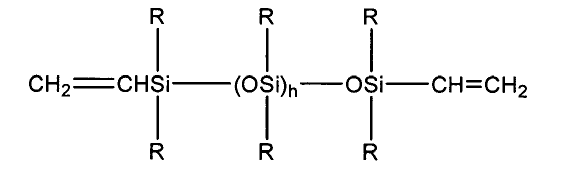

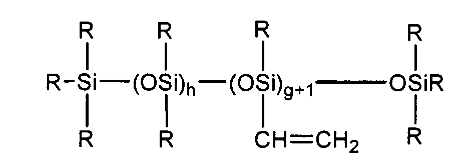

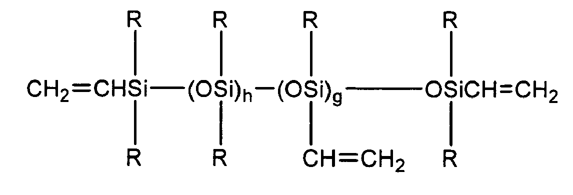

In the above general formulas, R has the same meaning as R⁴ with the exception of not including alkenyl groups. g and h are integers that satisfy g ≥ 1 and h ≥ 0 respectively, and the value of g+h is a number that enables the molecular weight and viscosity of the organopolysiloxane to satisfy the values described above.

### - Component (b)

The organohydrogenpolysiloxane of the component (b) contains at least two (typically from 2 to 200), and preferably three or more (typically from 3 to 100) hydrogen atoms bonded to silicon atoms (SiH groups). The component (b) reacts with the component (a) and functions as a cross-linking agent. There are no particular restrictions on the molecular structure of the organohydrogenpolysiloxane, and conventionally produced linear, cyclic, branched, or three dimensional network (resin- like) organohydrogenpolysiloxanes can be used as the component (b). In those cases where the component (b) has a linear structure, the SiH groups may be bonded solely to silicon atoms at the molecular chain terminals, or solely to non-terminal silicon atoms within the molecular chain, or may also be bonded to both these types of silicon atoms. Furthermore, the number of silicon atoms within each molecule (namely, the polymerization degree) is typically within a range from 2 to 300, and is preferably from 4 to 150, and an organohydrogenpolysiloxane that is liquid at 25°C is particularly favorable as the component (b).

Examples of the component (b) include organohydrogenpolysiloxanes represented by an average composition formula (4) shown below.

R⁵_{d}HₑSiO_{(4-d-e)/2} (4)

(wherein, R⁵ represents identical or different, unsubstituted or substituted monovalent hydrocarbon groups that preferably contain from 1 to 10, and even more preferably from 1 to 8 carbon atoms, d and e represent positive numbers that preferably satisfy 0.7 ≤ d ≤ 2.1, 0.001 ≤ e ≤ 1.0 and 0.8 ≤ d+e ≤ 3.0, and even more preferably satisfy 1.0 ≤ d ≤ 2.0,0.01 ≤ e ≤ 1.0 and 1.5 ≤ d+e ≤ 2.5)

Examples of the group R⁵ include the same groups as those described above for the group R⁴ within the above average composition formula (3) (but excluding the alkenyl groups).

Specific examples of organohydrogenpolysiloxanes represented by the above average composition formula (4) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with dimethylhydrogensiloxy groups, copolymers of methylhydrogensiloxane and dimethylsiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with dimethylhydrogensiloxy groups, copolymers of methylhydrogensiloxane, methylphenylsiloxane and dimethylsiloxane with both terminals blocked with dimethylhydrogensiloxy groups, copolymers comprising (CH₃)₂HSiO_{1/2} units, (CH₃)₂SiO_{2/2} units, and SiO_{4/2} units, copolymers comprising (CH₃)₂HSiO_{1/2} units, (CH₃)₃SiO_{1/2} units, and SiO_{4/2} units, copolymers comprising (CH₃)₂HSiO_{1/2} units and SiO_{4/2} units, and copolymers comprising (CH₃)₂HSiO_{1/2} units, SiO_{4/2} units, and (C₆H₅)₃SiO_{1/2} units.

The quantity added of the component (b) must be sufficient that the quantity of SiH groups within this component (b), relative to each 1 mol of alkenyl groups bonded to silicon atoms within the component (a), is within a range from 0.1 to 5.0 mols, preferably from 0.5 to 3.0 mols, and even more preferably from 0.8 to 2.0 mols. If the quantity added of the component (b) yields a quantity of SiH groups that is less than 0.1 mols, then the cross-linking density of the cured product obtained from the composition is too low, which has an adverse effect on the heat resistance of the cured product. In contrast, if the quantity added yields a quantity of SiH groups that exceeds 5.0 mols, then foaming problems caused by a dehydrogenation reaction may occur within the cured product, and the heat resistance of the resulting cured product may also deteriorate.

### - Component (c)

The platinum group metal-based catalyst of the component (c) is used for accelerating the addition curing reaction (the hydrosilylation reaction) between the component (a) and the component (b). Conventional platinum group metal-based catalysts can be used as the component (c), although the use of platinum or a platinum compound is preferred. Specific examples of the component (c) include platinum black, platinic chloride, chloroplatinic acid, alcohol-modified chloroplatinic acid, and coordination compounds of chloroplatinic acid with olefins, aldehydes, vinylsiloxanes or acetylene alcohols.

The quantity added of the component (c) need only be an effective catalytic quantity, may be suitably increased or decreased in accordance with the desired curing rate, and preferably yields a mass of the platinum group metal relative to the mass of the component (a) that falls within a range from 0.1 to 1,000 ppm, and even more preferably from 1 to 200 ppm.

### < Ultraviolet Light-curable Silicone Compositions>

Specific examples of suitable ultraviolet light-curable silicone compositions include ultraviolet light-curable silicone compositions comprising:
(d) an ultraviolet light-reactive organopolysiloxane, and
(e) a photopolymerization initiator.

### - Component (d)

The ultraviolet light-reactive organopolysiloxane of the component (d) typically functions as the base polymer of the ultraviolet light-curable silicone composition. Although there are no particular restrictions on the component (d), the component (d) is preferably an organopolysiloxane containing at least two, even more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw materials, the organopolysiloxane of the component (d) is preferably basically either a straight-chain structure with no branching, in which the molecular chain (the principal chain) comprises repeating diorganosiloxane units (R⁴₂SiO_{2/2} units), and both molecular chain terminals are blocked with triorganosiloxy groups (R⁴₃SiO_{1/2} units) or triorganosilyl-substituted alkyl groups such as triorganosilylethyl groups, or a cyclic structure with no branching in which the molecular chain comprises repeating diorganosiloxane units, although the structure may also include partial branch structures comprising trifunctional siloxane units (R⁴SiO_{3/2} units) and/or SiO_{4/2} units or the like (in the above formulas, R⁴ is as defined above). In those cases where the organopolysiloxane of the component (d) has a straight-chain structure, the ultraviolet light-reactive groups may exist solely at the molecular chain terminals, solely at non-terminal positions within the molecular chain, or may also exist at both these positions, although structures containing ultraviolet light-reactive groups at least at both molecular chain terminals are preferred.

Examples of suitable ultraviolet light-reactive groups include alkenyl groups such as a vinyl group, allyl group or propenyl group; alkenyloxy groups such as a vinyloxy group, allyloxy group, propenyloxy group or isopropenyloxy group; aliphatic unsaturated groups other than alkenyl groups, such as an acryloyl group or methacryloyl group; as well as a mercapto group, epoxy group, or hydrosilyl group, and of these, an acryloyl group, methacryloyl group, mercapto group, epoxy group or hydrosilyl group is preferred, and an acryloyl group or methacryloyl group is particularly desirable.

The ultraviolet light-reactive groups may be directly bonded to silicon atoms constituting the backbone chain of the organopolysiloxane of the component (d) or bonded to silicon atoms via linkage groups such as alkylene groups, depending on the types of the ultraviolet light-reactive groups.

Although there are no particular restrictions on the viscosity of the organopolysiloxane, the viscosity at 25°C is preferably within a range from 100 to 1,000,000 mPa·s, even more preferably from 200 to 500,000 mPa·s, and is most preferably from 200 to 100,000 mPa·s.

Examples of preferred forms of the component (d) include organopolysiloxanes containing at least two ultraviolet light-reactive groups, represented by either a general formula (5) shown below: 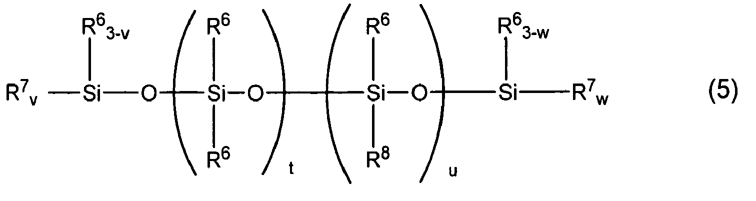 [wherein, R⁶ represents identical or different, unsubstituted or substituted monovalent hydrocarbon groups that contain no ultraviolet light-reactive groups, R⁷ and R⁸ represent identical or different ultraviolet light-reactive groups or groups that contain an ultraviolet light-reactive group, t represents an integer from 5 to 1,000, u represents an integer from 0 to 100, v represents an integer from 0 to 3, and w represents an integer from 0 to 3, provided that v+w+u ≥ 2] or a general formula (6) shown below: 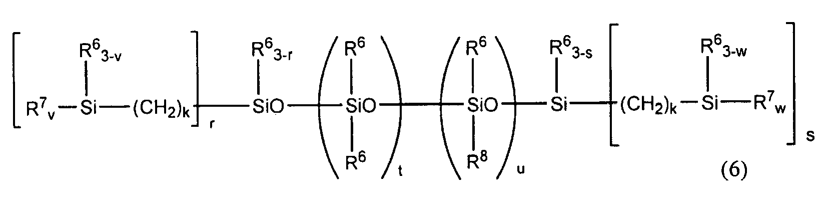 [wherein, R⁶, R⁷, R⁸, t, u, v and w are as defined above for the general formula (5), k represents an integer from 2 to 4, and r and s each represent an integer from 1 to 3, provided that vr+ws+u ≥ 2].

In the above general formulas (5) and (6), R⁶ represents identical or different, unsubstituted or substituted monovalent hydrocarbon groups that contain no ultraviolet light-reactive groups, and preferably contain from 1 to 20, even more preferably from 1 to 10, and most preferably from 1 to 8 carbon atoms. Examples of the monovalent hydrocarbon groups represented by R⁶ include alkyl groups such as a methyl group, ethyl group, propyl group, isopropyl group, butyl group, isobutyl group, tert-butyl group, pentyl group, hexyl group, 2-ethylhexyl group, 2-ethylbutyl group, or octyl group; aryl groups such as a phenyl group, tolyl group, xylyl group, naphthyl group, or diphenyl group; cycloalkyl groups such as a cyclopentyl group or cyclohexyl group; aralkyl groups such as a benzyl group or phenylethyl group; and groups in which a portion of, or all of, the hydrogen atoms within the above hydrocarbon groups have been substituted with a halogen atom, cyano group, amino group, or carboxyl group or the like, including a chloromethyl group, chloropropyl group, bromoethyl group, trifluoropropyl group, cyanoethyl group, and 3-cyanopropyl group, and of these, a methyl group or phenyl group is preferred, and a methyl group is particularly desirable. Furthermore, the monovalent hydrocarbon group represented by R⁶ may also include one or more sulfonyl groups, ether linkages (-O-) or carbonyl groups or the like within the group skeleton.

In the above general formulas (5) and (6), examples of the ultraviolet light-reactive groups represented by R⁷ and R⁸ are as described above. The groups containing an ultraviolet light-reactive group mean groups which are formed of an ultraviolet light-reactive group and at least one linkage group to which the ultraviolet light-reactive group is bonded, and are bonded to silicon atoms at the linkage group, and specific examples of R⁷ and R⁸ include a 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{(2-methacryloyloxyethoxy)dimethylsilyl}ethyl group, 2-{bis(2-acryloyloxyethoxy)methylsilyl} ethyl group, 2-{(2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl} ethyl group, and 2- {(1 -acryloyloxy-3-methacryloyloxy-2-propoxy)dimethylsilyl}ethyl group, and examples of preferred groups include a 3-methacryloyloxypropyl group, 3-acryloyloxypropyl group, 2-{bis(2-methacryloyloxyethoxy)methylsilyl} ethyl group, 2-{(2-methacryloyloxyethoxy)dimethylsilyl} ethyl group, 2-{bis(2-acryloyloxyethoxy)methylsilyl}ethyl group, 2-{(2-acryloyloxyethoxy)dimethylsilyl} ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl} ethyl group, and 2-{(1-acryloyloxy-3-methacryloyloxy-2-propoxy)dimethylsilyl} ethyl group.

In general formulas (5) and (6), R⁷ and R⁸ may be either the same or different, and individual R⁷ and R⁸ groups may be the same as, or different from, other R⁷ and R⁸ groups.

In the above general formulas (5) and (6), t is typically an integer within a range from 5 to 1,000, and is preferably an integer from 10 to 800, and even more preferably from 50 to 500, u is typically an integer within a range from 0 to 100, and is preferably an integer from 0 to 50, and even more preferably from 0 to 20. v is typically an integer within a range from 0 to 3, and is preferably an integer from 0 to 2, and even more preferably either 1 or 2. w is typically an integer within a range from 0 to 3, and is preferably an integer from 0 to 2, and is even more preferably either 1 or 2. In the above general formula (6), k is typically an integer within a range from 2 to 4, and is preferably either 2 or 3. r and s each represent an integer from 1 to 3, and preferably represent either 1 or 2. Moreover, as described above, the organopolysiloxanes represented by the above general formulas (5) and (6) contain at least two of the above ultraviolet light-reactive groups, and consequently v+w+u ≥ 2 in the formula (5), and vr+ws+u ≥ 2 in the formula (6).

Specific examples of organopolysiloxanes represented by the above formulas (5) and (6) include the compounds shown below. 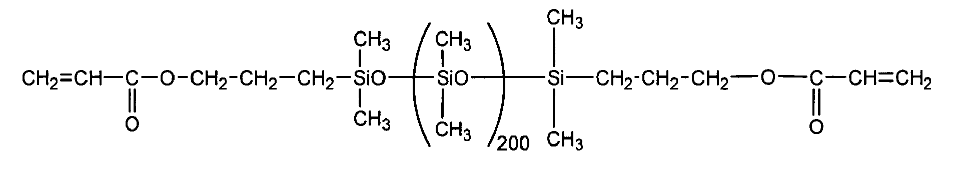 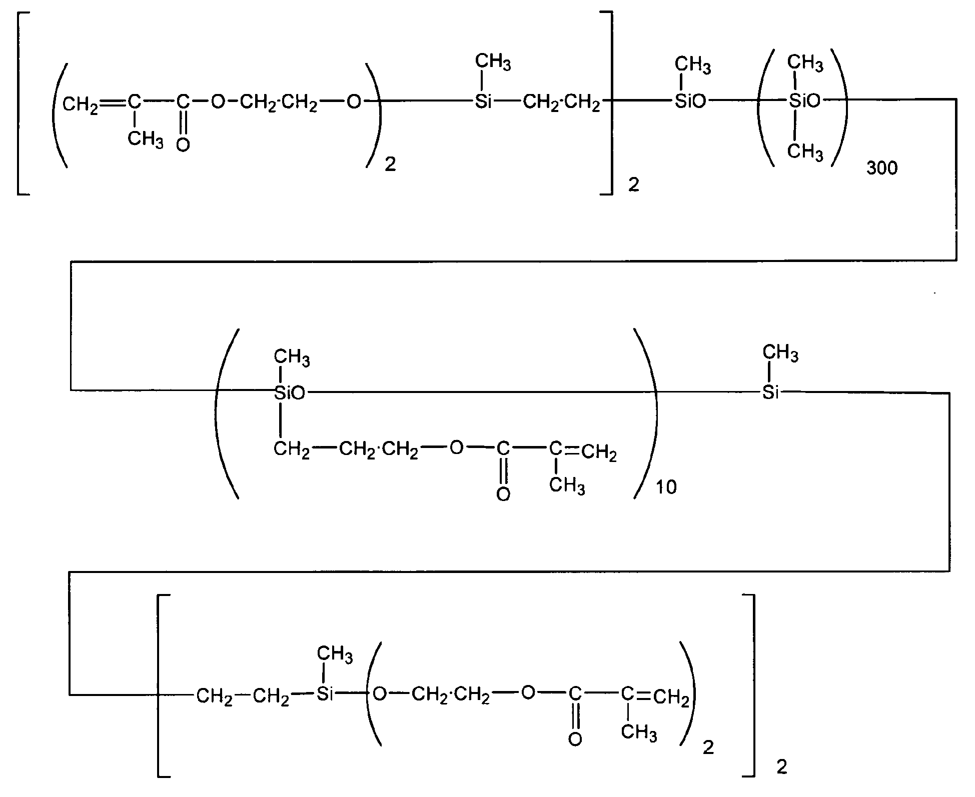 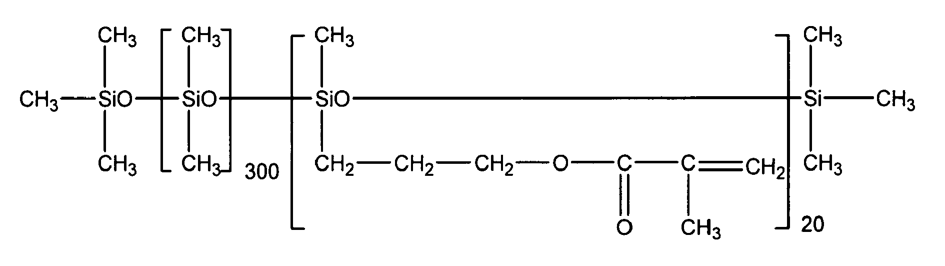 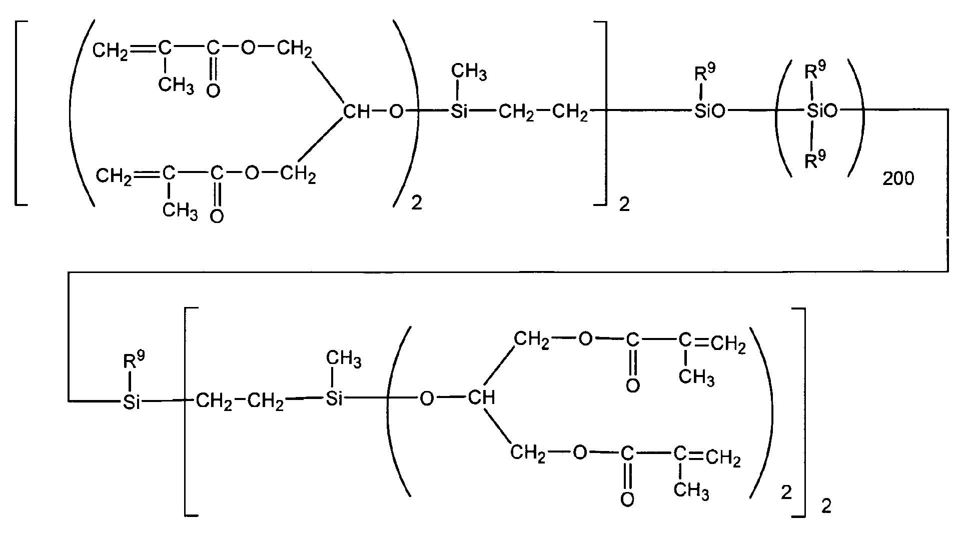 [wherein, of the R⁹ groups, 90 mol% are methyl groups and 10 mol% are phenyl groups]

### -Component (e)

The photopolymerization initiator of the component (e) has the effect of accelerating the photopolymerization of the ultraviolet light-reactive groups within the above component (d). There are no particular restrictions on the component (e), and specific examples of suitable initiators include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxycyclohexyl phenyl ketone, 2-methyl-(4-(methylthio)phenyl)-2-morpholino-I -propane, 2,2-dimethoxy2-phenylacetophenone, diethoxyacetophenone, and 2-hydroxy-2-methyl-1-phenylpropan-1-one, preferred initiators include benzophenone, 4-methoxyacetophenone, 4-methylbenzophenone, diethoxyacetophenone, 1-hydroxycyclohexyl phenyl ketone, and 2-hydroxy-2-methyl-1-phenylpropan-1-one, and particularly desirable initiators include diethoxyacetophenone, 1-hydroxycyclohexyl phenyl ketone, and 2-hydroxy-2-methyl-1-phenylpropan-1-one. These photopolymerization initiators may be used either alone, or in combinations of two or more different initiators.

Although there are no particular restrictions on the quantity added of the component (e), the quantity is preferably within a range from 0.01 to 10 parts by mass, even more preferably from 0.1 to 3 parts by mass, and most preferably from 0.5 to 3 parts by mass, per 100 parts by mass of the component (d). Provided the quantity added falls within the above range, fusion of fibers within the resulting heat-resistant inorganic textile can be more readily prevented.

### < Condensation-curable Silicone Compositions>

Specific examples of suitable condensation-curable silicone compositions include condensation-curable silicone compositions comprising:
(h) an organopolysiloxane containing at least two silanol groups (namely, silicon atom-bonded hydroxyl groups) or silicon atom-bonded hydrolyzable groups, preferably at both molecular chain terminals,
(i) a hydrolyzable silane and/or a partial hydrolysis-condensation product thereof as an optional component, and
(j) a condensation reaction catalyst as another optional component.

### - Component (h)

The component (h) is an organopolysiloxane that contains at least two silicon atom-bonded hydroxyl groups or silicon atom-bonded hydrolyzable groups, and functions as the base polymer of the condensation-curable silicone composition. The organopolysiloxane of the component (h) is basically a straight-chain structure or cyclic structure with no branching, in which the molecular chain comprises repeating diorganosiloxane units, although the structure may also include partial branch structures.

Incidentally, in the present specification, the "hydrolyzable group" refers to a group which can form a hydroxy group upon decomposition by the action of water.

In the organopolysiloxane of the component (h), examples of suitable hydrolyzable groups include acyloxy groups such as an acetoxy group, octanoyloxy group, or benzoyloxy group; ketoxime groups (namely, iminoxy groups) such as a dimethyl ketoxime group, methyl ethyl ketoxime group, or diethyl ketoxime group; alkoxy groups such as a methoxy group, ethoxy group, or propoxy group; alkoxyalkoxy groups such as a methoxyethoxy group, ethoxyethoxy group, or methoxypropoxy group; alkenyloxy groups such as a vinyloxy group, isopropenyloxy group, or 1-ethyl-2-methylvinyloxy group; amino groups such as a dimethylamino group, diethylamino group butylamino group, or cyclohexylamino group; aminoxy groups such as a dimethylaminoxy group or diethylaminoxy group; and amide groups such as an N-methylacetamide group, N-ethylacetamide group, or N-methylbenzamide group.

These hydrolyzable groups are preferably positioned at both molecular chain terminals of a straight-chain diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups, and dialkoxyorganosiloxyethyl groups.

Examples of other groups bonded to silicon atoms, besides the hydroxyl groups (silanol groups) and hydrolyzable groups, include monovalent hydrocarbon groups, and specific examples of these monovalent hydrocarbon groups include the same unsubstituted or substituted monovalent hydrocarbon groups as those exemplified above in relation to R⁴ within the above average composition formula (3).

Suitable examples of the component (h) include the organopolysiloxanes with both molecular chain terminals with silicon atom-bonded hydroxyl groups or silicon atom-bonded hydrolyzable groups represented by the formulas shown below. 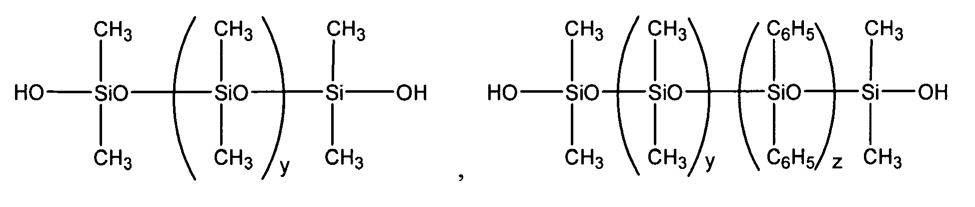 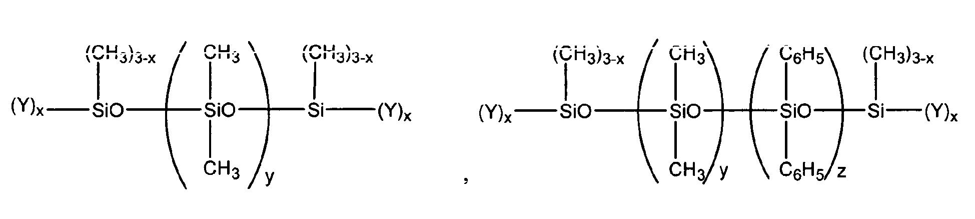 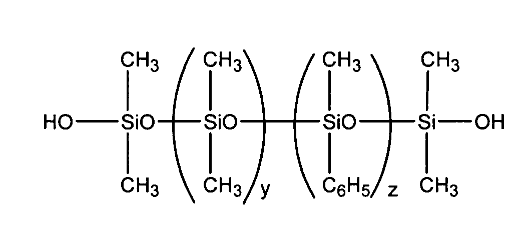 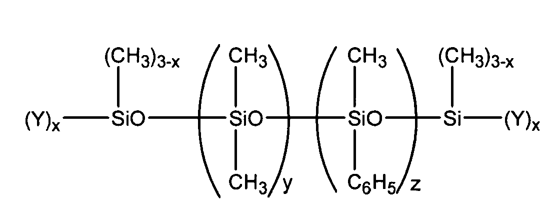 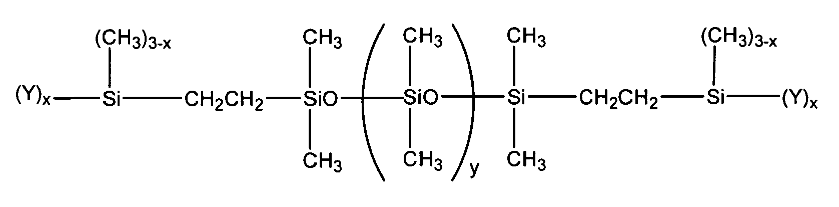 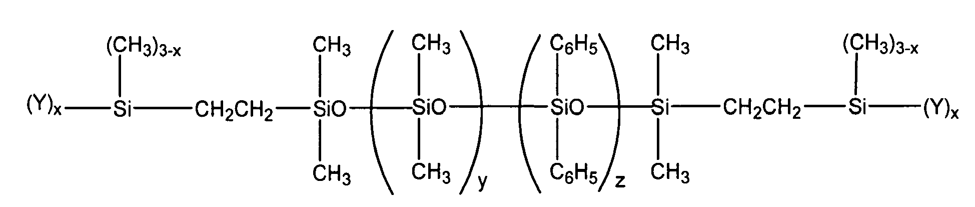 [wherein, Y represents a hydrolyzable group, x represents 1, 2, or 3, and y and z each represent an integer of 1 to 1,000]

Of the organopolysiloxanes represented by the above chemical formulas, specific examples of compounds containing hydrolyzable groups Y at both terminals include dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenylsiloxane with both molecular chain terminals blocked with trimethoxysiloxy groups, dimethylpolysiloxane with both molecular chain terminals blocked with methyldimethoxysiloxy groups, dimethylpolysiloxane with both molecular chain terminals blocked with triethoxysiloxy groups, and dimethylpolysiloxane with both molecular chain terminals blocked with 2-(trimethoxysiloxy)ethyl groups. These compounds may be used either alone, or in combinations of two or more different compounds.

### -Component (i)

The hydrolyzable silane and/or partial hydrolysis-condensation product thereof of the component (i) is an optional component, and functions as a curing agent. In those cases where the base polymer of the component (h) is an organopolysiloxane that contains at least two silicon atom-bonded hydrolyzable groups other than silanol groups within each molecule, the addition of the component (i) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (i).

Examples of preferred forms of the above hydrolyzable silane include compounds represented by a formula (7) shown below:

R¹⁰_{f}SiX_{4-f} (7)

(wherein, R¹⁰ represents an unsubstituted or substituted monovalent hydrocarbon group, X represents a hydrolyzable group, and f represents either 0 or 1).

Preferred examples of R¹⁰ include alkyl groups such as a methyl group, ethyl group, propyl group, butyl group, pentyl group or hexyl group; aryl groups such as a phenyl group or tolyl group; and alkenyl groups such as a vinyl group or allyl group. Examples of X include all of the groups exemplified as potential silicon atom-bonded hydrolyzable groups Y within the aforementioned component (h).

Specific examples of the hydrolyzable silane include methyltriethoxysilane, vinyltriethoxysilane, vinyltriacetoxysilane, ethyl orthosilicate, and partial hydrolysis-condensation products of these compounds. These compounds may be used either alone, or in combinations of two or more different compounds.

In those cases where a hydrolyzable silane and/or partial hydrolysis-condensation product thereof of the component (i) is used, the quantity added is preferably within a range from 0.01 to 20 parts by mass, and even more preferably from 0.1 to 10 parts by mass, per 100 parts by mass of the component (h). In those cases where a component (i) is used, using a quantity within the above range ensures that the condensation-curable silicone composition exhibits a particularly superior storage stability and curing rate.

### - Component (j)

The condensation reaction catalyst of the component (j) is an optional component, and need not be used in cases where the above hydrolyzable silane and/or partial hydrolysis-condensation product thereof of the component (i) contains aminoxy groups, amino groups or ketoxime groups or the like. Examples of the condensation reaction catalyst of the component (j) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin (2-ethylhexanoate); metal salts of organic carboxylic acids such as tin naphthenate, tin oleate, tin butyrate, cobalt naphthenate, and zinc stearate; amine compounds or the salts thereof such as hexylamine and dodecylamine phosphate; quaternary ammonium salts such as benzyltriethylammonium acetate; lower fatty acid salts of alkali metals such as potassium acetate; dialkylhydroxylamines such as dimethylhydroxylamine and diethylhydroxylamine; and guanidyl group-containing organosilicon compounds. These catalysts may be used either alone, or in combinations of two or more different catalysts.

In those cases where a condensation reaction catalyst of the component (j) is used, although there are no particular restrictions on the quantity added, the quantity is preferably within a range from 0.01 to 20 parts by mass, and even more preferably from 0.1 to 10 parts by mass, per 100 parts by mass of the component (h). If the component (j) is used, then provided the quantity falls within the above range, the heat-resistant inorganic textile obtained by using the condensation-curable silicone composition within the production method of the present invention is resistant to fusion between fibers.

### (1-3) Method of conducting Coating Treatment using Meltable Silicone Resin or Curable Silicone Composition

Examples of methods of subjecting the inorganic base textile to a coating treatment with a meltable silicone resin or curable silicone composition include methods that use a meltable silicone resin in a solventless state, namely, methods in which the meltable silicone resin is heated and melted, and then applied to the inorganic base textile in a liquid state, and the applied meltable silicone resin is then cooled to room temperature and solidified; methods that use a curable silicone composition in a solventless state, namely, methods in which either a curable silicone composition that is liquid at room temperature is applied in neat form, or a curable silicone composition that is solid at room temperature is heated and melted, and then applied to the inorganic base textile in a liquid state; methods in which the meltable silicone resin, or the curable silicone composition in those cases where the curable silicone composition is stable with respect to water, is emulsified within water using an emulsifying agent such as a nonionic surfactant or cationic surfactant, thereby preparing a water-based emulsion, and this eater-based emulsion is then applied to the inorganic base textile and dried; and methods in which the meltable silicone resin or curable silicone composition is dissolved in an organic solvent such as toluene or tetrahydrofuran to form an organic solvent solution, and this solution is then applied to the inorganic base textile and dried.

In those cases where a meltable silicone resin or a curable silicone composition that is solid at room temperature is heated and then applied in a liquid state, the heating temperature is preferably set such that the viscosity of the liquid meltable silicone resin or liquid curable silicone composition is typically within a range from 1 to 50,000 mPa·s, and preferably from 10 to 10,000 mPa·s. Specifically, the heating temperature is usually within a range from 50 to 200°C. In those cases where a curable silicone composition that is liquid at room temperature is applied in a solventless form, the viscosity of the curable silicone composition is typically within a range from 1 to 50,000 mPa·s, and is preferably from 10 to 10,000 mPa·s.

In those cases where a curable silicone composition that is liquid at room temperature is applied as is, the composition has typically a viscosity at room temperature of 1 to 50,000 mPa·s, and preferably 10 to 10,000 mPa·s.

In those cases where the meltable silicone resin or curable silicone composition is applied as a water-based emulsion or organic solvent solution, the water-based emulsion or organic solvent solution is preferably prepared such that the viscosity at 25°C is typically within a range from 1 to 50,000 mPa·s, and preferably from 10 to 10,000 mPa·s. Provided the viscosity is within this range, the meltable silicone resin layer or curable silicone composition layer that coats the inorganic base textile is more likely to exhibit a uniform thickness.

In this case, the concentration of the meltable silicone resin or curable silicone composition in the water-based emulsion or organic solvent solution is selected so that the required viscosity may be achieved, and is typically within a range from 1 to 60% by mass, and preferably from 5 to 50% by mass.

Examples of methods that can be used for applying the meltable silicone resin or curable silicone composition to the inorganic base textile include immersion and spray coating methods and the like. In the process of subjecting the inorganic base textile to a coating treatment with the meltable silicone resin or curable silicone composition, all of the inorganic base fibers that constitute the inorganic base textile are preferably coated with a meltable silicone resin layer or curable silicone composition layer. This coating treatment forms a meltable silicone resin layer or curable silicone composition layer that coats the inorganic base textile.

The coating quantity of the meltable silicone resin or curable silicone composition is typically within a range from 0.01 to 100% by mass, and preferably from 0.1 to 50% by mass relative to the inorganic base textile. Provided the coating quantity is within this range, fusion between the inorganic base fibers is unlikely, a coating of uniform thickness can be formed readily, and the process is also economically favorable.

### (2) Non-melting Treatment of Meltable Silicone Resin Layer or Curing of Curable

### Silicone Composition Layer

In the production method 1, the next step comprises conducting a non-melting treatment of the meltable silicone resin layer formed in the above step on the inorganic base fibers that constitute the inorganic base textile. Furthermore, in the production method 2, the next step comprises curing the curable silicone composition layer formed in the above step on the inorganic base fibers that constitute the inorganic base textile.

### (2-1) Non-melting Treatment of Meltable Silicone Resin Layer

In the production method 1, because the silicone resin layer is meltable prior to the non-melting treatment, it melts or softens when exposed to high temperatures, but the non-melting treatment converts the layer to a non-melting silicone resin layer. The non-melting treatment can be conducted, for example, by treating the silicone resin layer with an acid. The treatment with an acid causes a dehydration-condensation between the residual hydrocarbyloxy groups and silanol groups within the meltable silicone resin layer, thereby causing a cross-linking reaction that increases the density of three dimensional network structures. It is thought that this change results in the meltable silicone resin layer becoming a non-melting silicone resin layer. The non-melting silicone resin layer obtained from the non-melting treatment does not melt even if exposed to high temperatures, meaning the inorganic base fibers coated with the non-melting silicone resin layer do not fuse together.

Examples of the acid used in the non-melting treatment described above includes gaseous acids such as hydrogen chloride gas, and liquids such as hydrochloric acid, sulfuric acid and methanesulfonic acid. The nature and concentration of the acid can be selected appropriately in accordance with the quantity of phenyl groups incorporated within the meltable silicone resin used as the raw material. In those cases where the quantity of phenyl groups incorporated within the meltable silicone resin is low, for example in those cases where the ratio of phenyl groups relative to the combined total of organic groups and hydroxyl groups bonded to silicon atoms within the meltable silicone resin (hereafter, this ratio is referred to as the "phenyl group content") is within a range from 0 to 5 mol%, the use of hydrochloric acid with a concentration of not more than 50% by mass is preferred, the use of hydrochloric acid with a concentration of not more than 30% by mass is even more preferred, and the use of hydrochloric acid with a concentration of 10 to 25% by mass is particularly desirable. By using such an acid, siloxane equilibration reactions are less likely to occur during the non-melting treatment, meaning fusion between the inorganic base fibers is unlikely to occur. In contrast, in those cases where the phenyl group content within the meltable silicone resin is high, for example in cases where the phenyl group content exceeds 5 mol% but is not more than 25 mol%, the use of hydrogen chloride gas or concentrated sulfuric acid or the like is preferred. By using such an acid, the non-melting treatment reaction can proceed rapidly even in those cases where the large quantity of phenyl groups causes significant steric hindrance.

In those cases where a gaseous acid is used, the treatment with an acid can be conducted by bringing the inorganic base textile that has been subjected to a coating treatment with the meltable silicone resin into contact with an atmosphere containing the acid, whereas in those cases where a liquid acid is used, the treatment can be conducted by immersing the inorganic base textile that has been subjected to a coating treatment with the meltable silicone resin in the acid. The treatment temperature is typically within a range from 5 to 50°C, and is preferably from 10 to 30°C, and the non-melting treatment time is typically within a range from 10 to 50 hours.

### (2-2) Curing of Curable Silicone Composition Layer

In the production method 2, the silicone cured product layer obtained by curing the curable silicone composition layer does not melt even when exposed to high temperatures, and consequently the inorganic base fibers coated with the silicone cured product layer do not fuse together.

### <Method of Curing Addition-curable Silicone Composition Layer>

Heating the inorganic base textile that has been subjected to a coating treatment with an addition-curable silicone composition causes a hydrosilylation reaction to proceed within the composition, thereby curing the silicone composition. Because the curing rate is dependent on the thickness of the coating, namely, is dependent on the coating quantity of the composition, the temperature conditions during curing can be selected appropriately in accordance with the coating quantity, although the temperature is preferably within a range from 80 to 300°C, and even more preferably from 100 to 200°C. The curing time is preferably within a range from 1 minute to 3 hours, and is even more preferably from 3 minutes to 2 hours. Furthermore, secondary curing may also be conducted if required, and the temperature conditions during such secondary curing are preferably at least 120°C, and even more preferably within a range from 150 to 250°C. The secondary curing time is preferably within a range from 10 minutes to 48 hours, and even more preferably from 30 minutes to 24 hours.

### <Method of Curing Ultraviolet Light-curable Silicone Composition Layer>

Irradiation of the inorganic base textile that has been subjected to a coating treatment with an ultraviolet light-curable silicone composition with ultraviolet light causes a curing reaction that is initiated within the composition by the photopolymerization initiator, thereby curing the composition. Because the curing rate is dependent on the thickness of the coating, namely, is dependent on the coating quantity of the composition, the ultraviolet light irradiation conditions during curing can be selected appropriately in accordance with the coating quantity. For example, the ultraviolet light irradiation typically uses an ultraviolet lamp or ultraviolet light emitting diode with an emission wavelength of 365 nm, and can be conducted under conditions including an illumination intensity of 5 to 500 m W/cm², and preferably from 10 to 200 mW/cm², and an amount of light of 0.5 to 100 J/cm², and preferably from 10 to 50 J/cm². Furthermore, secondary curing may also be conducted if required, and the temperature conditions during such secondary curing are preferably at least 120°C, and even more preferably within a range from 150 to 250°C. The secondary curing time is preferably within a range from 10 minutes to 48 hours, and even more preferably from 30 minutes to 24 hours.

### <Method of Curing Condensation-curable Silicone Composition Layer>

Allowing the inorganic base textile that has been subjected to a coating treatment with a condensation-curable silicone composition to stand within an atmosphere that contains moisture (for example, a humidity within a range from 25 to 90% RH, and preferably from 50 to 85% RH), causes a condensation reaction to proceed within the composition under the action of the moisture within the atmosphere, thereby curing the composition.. Heating may be conducted in the same manner as that used for an addition-curable silicone composition in order to accelerate the curing process. Furthermore, secondary curing may also be conducted if required, and the temperature conditions during such secondary curing are preferably at least 120°C, and even more preferably within a range from 150 to 250°C. The secondary curing time is preferably within a range from 10 minutes to 48 hours, and even more preferably from 30 minutes to 24 hours.

### (3) Ceramicization of the Non-melting Silicone Resin Layer or Silicone Cured Product Layer

The non-melting silicone resin layer or silicone cured product layer that coats the inorganic base fibers is heated under a non-oxidizing atmosphere at a temperature within a range from 400 to 1,500°C, thereby causing cleavage of carbon-hydrogen bonds and elimination of hydrogen, which leads to ceramicization and yields a heat-resistant inorganic ceramic layer formed of a silicon-carbon-oxygen based amorphous inorganic ceramic material. This heating temperature is preferably 600°C or higher, and is most preferably 800°C or higher. Furthermore, the heating temperature is preferably not more than 1,300°C, and even more preferably 1,100°C or lower. In other words, the heating temperature is preferably within a range from 600 to 1,300°C, and even more preferably from 800 to 1,100°C. Provided the heating is conducted within the above temperature range, cleavage of carbon-hydrogen bonds and elimination of hydrogen from within the non-melting silicone resin layer or silicone cured product layer proceeds readily, whereas elimination of silicon and carbon is unlikely to occur. In this manner, the silicon and carbon within the raw materials are retained effectively within the amorphous inorganic ceramic material of the product, meaning unnecessary waste of resources can be prevented.

The above thermal decomposition reaction proceeds more favorably in the presence of a small quantity of a group 8 element such as a platinum group metal like platinum, palladium or rhodium. The quantity of this group 8 metal element within the non-melting silicone resin layer or the silicone cured product layer is preferably within a range from 0.1 to 5,000 ppm, even more preferably from 10 to 2,000 ppm, even more preferably from 10 to 1,000 ppm, and is most preferably from 50 to 1,000 ppm. In this case, the required quantity of the group 8 element may be added, for example, to the meltable silicone resin or curable silicone composition that functions as the starting material. An addition-curable silicone composition usually includes a platinum group metal as a catalyst. In the absence of a group 8 element, the above heating is preferably conducted at a temperature of 600°C or higher.

There are no particular restrictions on the non-oxidizing atmosphere, provided oxidation of the non-melting silicone resin layer or silicone cured product layer is satisfactorily prevented during the firing process, although an inert gas atmosphere is preferred. Examples of suitable inert gases include nitrogen gas, argon gas and helium gas, and from a practical perspective, nitrogen gas is preferred.

### [Applications]

A heat-resistant inorganic textile produced using a production method of the present invention exhibits excellent heat resistance and strength and can be used favorably as an exhaust gas filter material, and particularly as an exhaust gas filter material for removing suspended particulate matter, which can be used, for example, for the purification of exhaust gases discharged from large vehicles such as trucks and buses, railway cars such as diesel locomotives, industrial machines that use diesel engines such as construction machinery, agricultural machinery and ships and the like, as well as exhaust gases from factories and domestic fuel cells.

### EXAMPLES

As follows is a more detailed description of the present invention using a series of examples and comparative examples, although the present invention is in no way limited by these examples. In these examples, molecular weight values are weight average molecular weights measured by GPC and referenced against polystyrene standards. Furthermore, "Me" represents a methyl group and "Ph" represents a phenyl group. The tests in the following examples were conducted at room temperature.

### [Example 1]

A meltable silicone resin comprising only MeSiO_{3/2} units as the siloxane units, and containing 5% by mass of hydroxyl groups (molecular weight: 1,000, average compositional formula: Me(OH)_{0.2}SiO_{1.3}, softening point: 65°C) was dissolved in tetrahydrofuran to form a 10% by mass tetrahydrofuran solution (viscosity at 25°C: 100 mPa·s). A glass fiber bundle formed of glass fiber with a diameter of 10 µm was immersed in the solution as an inorganic base textile, and was then dried at room temperature. The mass of the glass fiber bundle following this treatment was 10% greater than the mass of the untreated glass fiber bundle.

The thus obtained fiber bundle was immersed in a hydrochloric acid solution with a concentration of 20% by mass, and was left to stand for two days at room temperature. The fiber bundle was then washed with water until the waste water reached a pH value of 6, and was subsequently dried by heating at a temperature of approximately 200°C.

The fiber bundle was then heated under a non-oxidizing atmosphere in the manner described below. Namely, the fiber bundle was placed in an alumina boat, was subsequently heated under a nitrogen gas atmosphere inside an atmospheric electric furnace by raising the temperature from room temperature to 1,000°C at a rate of temperature increase of 100°C/hour over an approximately 10-hour period, and was then held at 1,000°C for a further one hour. Subsequently, the fiber bundle was cooled to room temperature at a rate of 200°C/hour. This process yielded a brown fiber bundle. No fusion between fibers was detected in the thus obtained fiber bundle.

### - Heating Loss

Comparison of the mass of the fiber bundle measured before and then after the heating process, and subsequent calculation of the proportion of mass lost as a result of the heating, relative to the mass prior to heating (hereafter referred to as the "heating loss ratio"), revealed a result of 2.1 %. The fiber diameter of the fibers within the fiber bundle following heating was approximately 10 µm. Furthermore, inspection of the shape of the fibers before and after heating using a SEM (scanning electron microscope) revealed no changes.

### - Heat Resistance Evaluation

This fiber bundle was exposed to air at 900°C for 150 hours. Calculation of the heating loss ratio revealed a result of 0.9%. Furthermore, inspection of the shape and dimensions of the fibers before and after heating using a SEM revealed no changes in either the shape or the dimensions.

### [Example 2]

With the exception of using a carbon fiber bundle formed of carbon fiber with a diameter of 10 µm as the inorganic base textile, instead of the glass fiber bundle formed of glass fiber with a diameter of 10 µm used in the example 1, a meltable silicone resin coating treatment was conducted in the same manner as the example 1. The mass of the carbon fiber bundle following this treatment was 10% greater than the mass of the untreated carbon fiber bundle.

Using the same procedure as the example 1, a black fiber bundle was obtained from this carbon fiber bundle. No fusion between fibers was detected in the thus obtained fiber bundle. The heating loss was 2.3%. Inspection of the shape and dimensions of the fibers before and after heating using a SEM revealed no changes in either the shape or the dimensions.

This fiber bundle was exposed to air at 900°C for 150 hours. Calculation of the heating loss ratio revealed a result of 2.1 %. Furthermore, inspection of the shape and dimensions of the fibers before and after heating using a SEM revealed no changes in either the shape or the dimensions.

### [Example 3]

A glass cloth 1080 (a product name, manufactured by Arisawa Manufacturing Co. Ltd.) as the inorganic base textile was immersed in a 10% by mass tetrahydrofuran solution of the same meltable silicone resin as that used in the example 1, and the glass cloth was then squeezed through a mangle and dried at room temperature. The mass of the glass cloth following this treatment was 10% greater than the mass of the untreated glass cloth.

Using the same procedure as the example 1, a brown inorganic fiber woven fabric was obtained from this glass cloth. No fusion between fibers or fusion of the woven fabric was detected in the thus obtained woven fabric. The heating loss was 0.6%. Inspection of the shape and dimensions of the fibers before and after heating using a SEM revealed no changes in either the shape or the dimensions.

This woven fabric was exposed to air at 900°C for 150 hours. Calculation of the heating loss ratio revealed a result of 1.2%. Furthermore, inspection of the shape and dimensions of the fibers before and after heating using a SEM revealed no changes in either the shape or the dimensions.

### [Example 4]

With the exceptions of replacing the meltable silicone resin used in the example 1 with a meltable silicone resin containing approximately 60 mol% of PhSiO_{3/2} units, approximately 20 mol% of Ph₂SiO units, and approximately 20 mol% of MeSiO_{3/2} units as the siloxane units, and containing 5% by mass of hydroxyl groups (molecular weight: 1,000, average compositional formula: Ph(Me)_{0.2}(OH)_{0.3}SiO_{1.1}, softening point: 92°C), and replacing the 20% by mass hydrochloric acid treatment with a 98% by mass sulfuric acid treatment, a brown fiber bundle was obtained in the same manner as the example 1. The mass of the glass fiber bundle following this coating treatment with the meltable silicone resin was 10% greater than the mass of the glass fiber bundle prior to the coating treatment. No fusion between fibers was detected in the thus obtained fiber bundle. The heating loss was 5.2%. Inspection of the shape and dimensions of the fibers before and after heating using a SEM revealed no changes in either the shape or the dimensions.

This fiber bundle was exposed to air at 900°C for 150 hours. Calculation of the heating loss ratio revealed a result of 1.2%. Furthermore, inspection of the shape and dimensions of the fibers before and after heating using a SEM revealed no changes in either the shape or the dimensions.

### [Comparative Example 1]

An untreated glass cloth 1080 (manufactured by Arisawa Manufacturing Co. Ltd.) was placed in an alumina boat, was subsequently heated under a nitrogen gas atmosphere inside an atmospheric electric furnace by raising the temperature from room temperature to 1,000°C at a rate of temperature increase of 100°C/hour over an approximately 10-hour period, and was then held at 1,000°C for a further one hour. Subsequent cooling of the glass cloth to room temperature at a rate of 200°C/hour yielded a silver rod-shaped glass object which had completely fused. The original shape of the fibers could not be detected.

### [Example 5]

(a) 90 parts by mass of a diorganopolysiloxane containing vinyl groups bonded to silicon atoms, represented by a formula shown below. 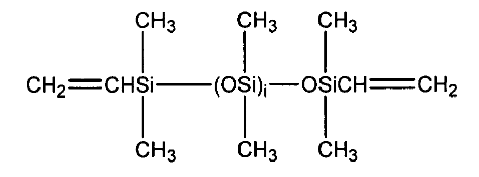 (wherein, i represents a number that yields a viscosity at 25°C for the siloxane of 600 mPa·s)
(b) 10 parts by mass of a diorganopolysiloxane containing hydrogen atoms bonded to silicon atoms, represented by a formula shown below. 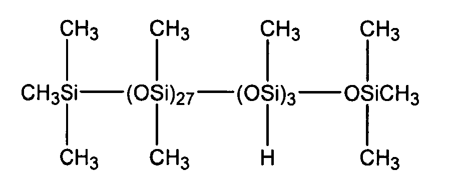
(c) 0.15 parts by mass of a toluene solution of a complex of platinum and divinyltetramethyldisiloxane (platinum element content: 0.5% by mass, a hydrosilylation catalyst)

The above components (a) and (b) were combined in a planetary mixer (a mixing device, manufactured by Inoue Manufacturing Co., Ltd.), and were stirred for one hour at room temperature. Subsequently, the component (c) was added to the planetary mixer and stirring was continued for a further 30 minutes at room temperature, thus yielding an addition-curable silicone composition.

This composition was dissolved in tetrahydrofuran to form a 10% by mass tetrahydrofuran solution (viscosity at 25°C: 50 mPa·s). A glass fiber bundle formed of glass fiber with a diameter of 10 µm was immersed in the solution as an inorganic base textile, and was then dried at room temperature. The mass of the glass fiber bundle following this treatment was 10% greater than the mass of the untreated glass fiber bundle.

The thus obtained fiber bundle was heated for 30 minutes at a temperature of approximately 150°C, thereby curing the applied composition.

The fiber bundle was then heated under a non-oxidizing atmosphere in the manner described below. Namely, the fiber bundle was placed in an alumina boat, was subsequently heated under a nitrogen gas atmosphere inside an atmospheric electric furnace by raising the temperature from room temperature to 600°C at a rate of temperature increase of 60°C/hour over an approximately 10-hour period, and was then held at 600°C for a further 8 hours. Subsequently, the fiber bundle was cooled to room temperature at a rate of 200°C/hour. This process yielded a black fiber bundle. No fusion between fibers was detected in the thus obtained fiber bundle.

The heating loss was 5.5%. The fiber diameter of the fibers within the fiber bundle following heating was approximately 10 µm. Furthermore, inspection of the shape of the fibers before and after heating using a SEM (scanning electron microscope) revealed no changes.

This fiber bundle was exposed to air at 900°C for 150 hours. Calculation of the heating loss ratio revealed a result of 0.3%. Furthermore, inspection of the shape and dimensions of the fibers before and after heating using a SEM revealed no changes in either the shape or the dimensions.

### [Example 6]

100 parts by mass of a liquid organopolysiloxane represented by a formula shown below: 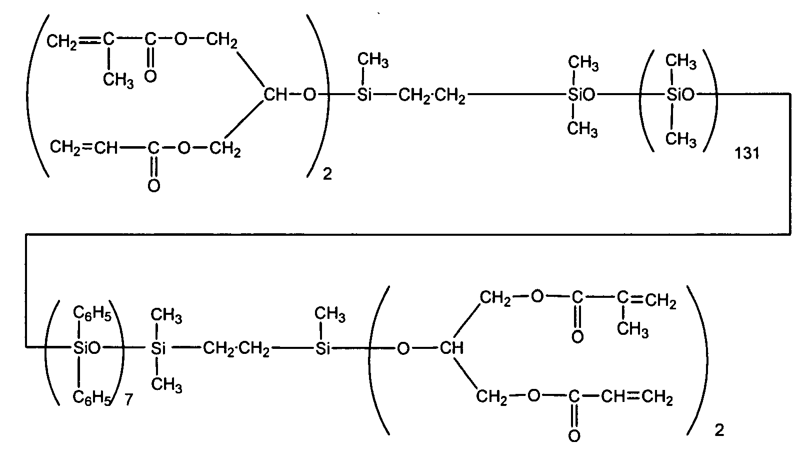 2 parts by mass of 2-hydroxy-2-methyl-1-phenylpropan-1-one, 1 part by mass of 2,4,6-trimethylbenzoyldiphenylphosphine oxide, 1 part by mass of a partial hydrolysis-condensation product of tetramethoxysilane (a methoxysiloxane oligomer), and 0.1 parts by mass of a titanium chelate compound represented by a formula shown below: 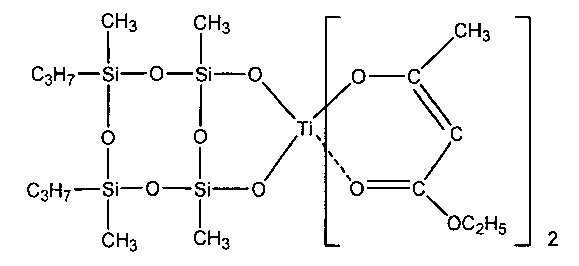 were mixed together, yielding an ultraviolet light-curable silicone composition.

This composition was dissolved in tetrahydrofuran to form a 10% by mass tetrahydrofuran solution (viscosity at 25°C: 150 mPa·s). A glass fiber bundle formed of glass fiber with a diameter of 10 µm was immersed in the solution as an inorganic base textile, and was then dried at room temperature. The mass of the glass fiber bundle following this treatment was 10% greater than the mass of the untreated glass fiber bundle.

The thus obtained fiber bundle was irradiated with ultraviolet light from two metal halide mercury lamps (illumination intensity: 80 W/cm², energy dose: 400 mJ/s), thereby curing the applied composition.

Using the same procedure as the example 5, a black fiber bundle was obtained from this carbon fiber bundle. No fusion between fibers was detected in the thus obtained fiber bundle. The heating loss was 6.2%. Inspection of the shape and dimensions of the fibers before and after heating using a SEM revealed no changes in either the shape or the dimensions.

This fiber bundle was exposed to air at 900°C for 150 hours. Calculation of the heating loss ratio revealed a result of 0.2%. Furthermore, inspection of the shape and dimensions of the fibers before and after heating using a SEM revealed no changes in either the shape or the dimensions.

### [Example 7]

To 100 parts by mass of a dimethylpolysiloxane with both terminals blocked with trimethoxysiloxy groups, represented by a formula shown below: 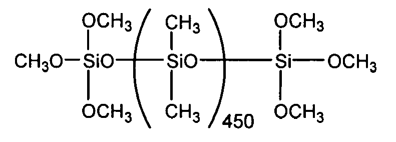 was added 0.1 parts by mass of a titanium chelate catalyst, and the resulting mixture was stirred thoroughly, yielding a condensation-curable silicone composition.

This composition was dissolved in tetrahydrofuran to form a 10% by mass tetrahydrofuran solution (viscosity at 25°C: 500 mPa.s). A glass fiber bundle formed of glass fiber with a diameter of 10 µm was immersed in the solution as an inorganic base textile, and was then dried at room temperature. The mass of the glass fiber bundle following this treatment was 10% greater than the mass of the untreated glass fiber bundle.

The thus obtained fiber bundle was heated to 180°C while standing for one hour in air having a humidity of 50% RH, thereby curing the applied composition.

Using the same procedure as the example 5, a black fiber bundle was obtained from this carbon fiber bundle. No fusion between fibers was detected in the thus obtained fiber bundle. The heating loss was 5.8%. Inspection of the shape and dimensions of the fibers before and after heating using a SEM revealed no changes in either the shape or the dimensions.

This fiber bundle was exposed to air at 900°C for 150 hours. Calculation of the heating loss ratio revealed a result of 0.3%. Furthermore, inspection of the shape and dimensions of the fibers before and after heating using a SEM revealed no changes in either the shape or the dimensions.

### [Example 8]

With the exception of using a carbon fiber bundle formed of carbon fiber with a diameter of 10 µm as the inorganic base textile, instead of the glass fiber bundle formed of glass fiber with a diameter of 10 µm used in the example 5, an addition-curable curable silicone composition coating treatment was conducted in the same manner as the example 5. The mass of the carbon fiber bundle following this treatment was 10% greater than the mass of the untreated carbon fiber bundle.

Using the same procedure as the example 5, a black fiber bundle was obtained from this carbon fiber bundle. No fusion between fibers was detected in the thus obtained fiber bundle. The heating loss was 9.3%. Inspection of the shape and dimensions of the fibers before and after heating using a SEM revealed no changes in either the shape or the dimensions.

This fiber bundle was exposed to air at 900°C for 150 hours. Calculation of the heating loss ratio revealed a result of 2.1%. Furthermore, inspection of the shape and dimensions of the fibers before and after heating using a SEM revealed no changes in either the shape or the dimensions.

### [Example 9]

A glass cloth 1080 (a product name, manufactured by Arisawa Manufacturing Co. Ltd.) as the inorganic base textile was immersed in a 10% by mass tetrahydrofuran solution of the same addition-curable silicone composition as that used in the example 5, and the glass cloth was then squeezed through a mangle and dried at room temperature. The mass of the glass cloth following this treatment was 10% greater than the mass of the untreated glass cloth.

Using the same procedure as the example 5, a black inorganic fiber woven fabric was obtained from this glass cloth. No fusion between fibers or fusion of the woven fabric was detected in the thus obtained woven fabric. The heating loss was 5.3%. Inspection of the shape and dimensions of the fibers before and after heating using a SEM revealed no changes in either the shape or the dimensions.

This woven fabric was exposed to air at 900°C for 150 hours. Calculation of the heating loss ratio revealed a result of 0.3%. Furthermore, inspection of the shape and dimensions of the fibers before and after heating using a SEM revealed no changes in either the shape or the dimensions.

### [Comparative Example 2]

An untreated glass cloth 1080 (manufactured by Arisawa Manufacturing Co. Ltd.) was placed in an alumina boat, was subsequently heated under a nitrogen gas atmosphere inside an atmospheric electric furnace by raising the temperature from room temperature to 600°C at a rate of temperature increase of 60°C/hour over an approximately 10-hour period, and was then held at 600°C for a further 8 hours. Subsequent cooling of the glass cloth to room temperature at a rate of 200°C/hour yielded a silver rod-shaped glass object which had completely fused. The original shape of the fibers could not be detected.

## Claims

1. A method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a meltable silicone resin, thereby forming a meltable silicone resin layer that coats the inorganic base fiber,
subjecting the meltable silicone resin layer to a non-melting treatment, thereby forming a non-melting silicone resin layer, and
heating the non-melting silicone resin layer under a non-oxidizing atmosphere, at a temperature within a range from 400 to 1,500°C, thereby converting the non-melting silicone resin layer to a heat-resistant inorganic ceramic layer.

2. The method according to claim 1, wherein the meltable silicone resin is represented by an average composition formula (2) shown below:
R¹ₘR²ₙ(OR³)ₚ(OH)_{q}SiO_{(4-m-n-p-q)/2} (2)
(wherein, each R¹ represents, independently, a hydrogen atom or a monovalent hydrocarbon group other than an aryl group that includes or does not include a carbonyl group, R² represents a aryl group, R³ represents a monovalent hydrocarbon group of 1 to 4 carbon atoms, m represents a number that satisfies: 0.1 ≤ m ≤ 2, n represents a number that satisfies: 0 ≤ n ≤ 2, p represents a number that satisfies: 0 ≤ p ≤ 1.5, and q represents a number that satisfies: 0 ≤ q ≤ 0.35, provided that p+q > 0 and 0.1 ≤ m+n+p+q ≤ 2.6).

3. The method according to either claim 1 or 2, wherein the non-melting treatment of the meltable silicone resin layer is conducted by treating the meltable silicone resin layer with an acid.

4. A method of producing a heat-resistant inorganic textile formed of a heat-resistant inorganic fiber that comprises an inorganic base fiber and a heat-resistant inorganic ceramic layer that coats the inorganic base fiber, the method comprising the steps of:
subjecting an inorganic base textile formed of the inorganic base fiber to a coating treatment with a curable silicone composition, thereby forming a curable silicone composition layer that coats the inorganic base fiber,
curing the curable silicone composition layer, thereby forming a silicone cured product layer, and
heating the silicone cured product layer under a non-oxidizing atmosphere, at a temperature within a range from 400 to 1,500°C, thereby converting the silicone cured product layer to a heat-resistant inorganic ceramic layer.

5. The method according to claim 4, wherein the curable silicone composition is an addition-curable silicone composition, a photocurable silicone composition, or a condensation-curable silicone composition.

6. The method according to any one of claims 1 through 5, wherein the inorganic base fiber is a glass fiber, carbon fiber or alumina fiber.

7. A heat-resistant inorganic textile produced by the method defined in any one of claims 1 through 6.

8. An exhaust gas filter, comprising the heat-resistant inorganic textile defined in claim 7.
